Europäisches Patentamt

European Patent Office

Office européen des brevets

(19)

(11) **EP 0 884 794 B1**

(12) **FASCICULE DE BREVET EUROPEEN**

(45) Date de publication et mention
de la délivrance du brevet:
**03.01.2001 Bulletin 2001/01**

(51) Int Cl.⁷: **H01M 8/02**

(21) Numéro de dépôt: **98401385.4**

(22) Date de dépôt: **09.06.1998**

(54) **Pile à combustible du type à distributeurs de réactifs en forme de plaques**

Brennstoffzelle mit plattenförmigen Reaktantverteilerelementen

Fuel cell comprising plate-like reactant distribution elements

(84) Etats contractants désignés:
**CH DE ES GB IT LI PT SE**

(30) Priorité: **10.06.1997 FR 9707188**

(43) Date de publication de la demande:
**16.12.1998 Bulletin 1998/51**

(73) Titulaires:
• **AUTOMOBILES PEUGEOT**
 **75116 Paris (FR)**
• **AUTOMOBILES CITROEN**
 **92200 Neuilly-sur-Seine (FR)**

(72) Inventeur: **Mosdale, Renaut**
 **78460 Chevreuse (FR)**

(74) Mandataire: **Berger, Helmut et al**
 **Cabinet WEINSTEIN**
 **56 A, rue du Faubourg Saint-Honoré**
 **75008 Paris (FR)**

(56) Documents cités:
**EP-A- 0 415 733      WO-A-97/08766**
**WO-A-97/13287        US-A- 3 554 809**
**US-A- 5 641 586**

## Description

L'invention concerne une pile à combustible du type comprenant au moins un ensemble formé par des électrodes d'anode et de cathode, un électrolyte situé entre les deux électrodes et des distributeurs en forme de plaques placées de part et d'autre de cet ensemble, au contact des électrodes, pour distribuer les réactifs, évacuer les produits de réaction et collecter le courant.

On connaît déjà des piles à combustible de ce type, dans lesquels les distributeurs sont formés par des plaques électriquement conductrices, par exemple en graphite, dans la face desquelles, qui est en contact avec l'électrode, sont pratiqués des canaux de circulation des gaz constituant les réactifs.

Ces distributeurs présentent l'inconvénient que les canaux empêchent, à leur applomb, le contact électronique entre la plaque et l'électrode et que, de plus, l'accès des gaz aux électrodes est limité à la surface ouverte des canaux.

On connaît encore des piles à combustible dans lesquelles les plaques de distributeur sont réalisées en un poreux électriquement conducteur. Ces plaques présentent l'avantage d'élargir la zone de réaction des électrodes par rapport aux plaques à canaux, mais présentent l'inconvénient que, du fait de la disposition diagonalement opposée des entrée et sortie du gaz, le parcours moyen de ce dernier ne correspond qu'à une fraction de la surface de l'électrode. En effet, la distribution par matériaux poreux peut être assimilée à la mise en parallèle d'une grande quantité de canaux de section très réduite et de perte de charge faible. De ce fait, le gaz se comporte comme un courant électronique et emprunte le trajet le plus court de l'entrée vers la sortie du réactif, délaissant des parties importantes du poreux éloignées du parcours optimal.

La présente invention a pour but de proposer une pile à combustible, qui ne présente pas les inconvénients qui viennent d'être énoncés, des piles connues.

Pour atteindre ce but, la pile à combustible selon l'invention est caractérisée en ce que chaque plaque est constituée d'un empilement de lames de poreux, adapté pour être parcouru en série par le gaz réactif.

Selon une caractéristique de l'invention, les lames sont imperméables au gaz réactif aux côtés en contact avec d'autres lames et à la face qui n'est pas en contact avec l'électrode.

Selon une autre caractéristique de l'invention, les lames de poreux adjacentes sont rendues imperméables au gaz à leurs côtés en regard, par des feuilles de matériaux imperméables au gaz interposées entre les lames.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un seul mode de réalisation de l'invention et dans lesquels :

La figure 1 illustre, schématiquement, le principe d'une pile à combustible hydrogène/oxygène à électrolyte solide.

La figure 2 est une vue en coupe, selon la ligne II-II de la figure 3, d'une pile à combustible selon la présente invention.

La figure 3 est une vue schématique en direction de la flèche III de la figure 2.

Sur le schéma de principe d'une pile à combustible, les numéros de référence 1, 2 et 3 désignent respectivement les électrodes d'anode et de cathode et, disposé entre les deux, un électrolyte polymère, par exemple solide. Les flèches 5 et 6 illustrent l'acheminement des réactifs, dans ce cas respectivement de l'hydrogène et de l'oxygène, aux électrodes d'anode et de cathode.

La fourniture de l'hydrogène et de l'oxygène aux électrodes d'anode et de cathode provoque les réactions suivantes :

$$2H_2 \rightarrow 4H^+ + 4e\text{-}$$

$$O_2 + 4H^+ + 4e\text{-} \rightarrow 2H_2O$$

Ainsi à l'anode, l'hydrogène est oxydé en protons et donne des électrons.

Les protons traversent l'électrolyte polymère solide isolant électronique et conducteur ionique, comme l'indique la flèche 7, pour venir participer, avec les électrons provenant du circuit électronique extérieur, à la réduction de l'oxygène à la cathode. La flèche 8 symbolise l'eau qui est produite à la cathode et est évacuée de la pile.

Les deux réactions provoquées par la fourniture aux électrodes des deux gaz réactifs met en jeu différentes phases d'espèces réactives, à savoir gazeux, ionique et électronique. Si l'une de ces espèces manque à la réaction, la génération d'électrons symbolisée en 9 s'arrête. Les performances d'une pile à combustible sont directement liées à la qualité de ce triple contact gaz/ions/électrons. Ce contact est réalisé au coeur de l'électrode, mais dépendra également de la façon dont le courant et les gaz sont distribués aux électrodes.

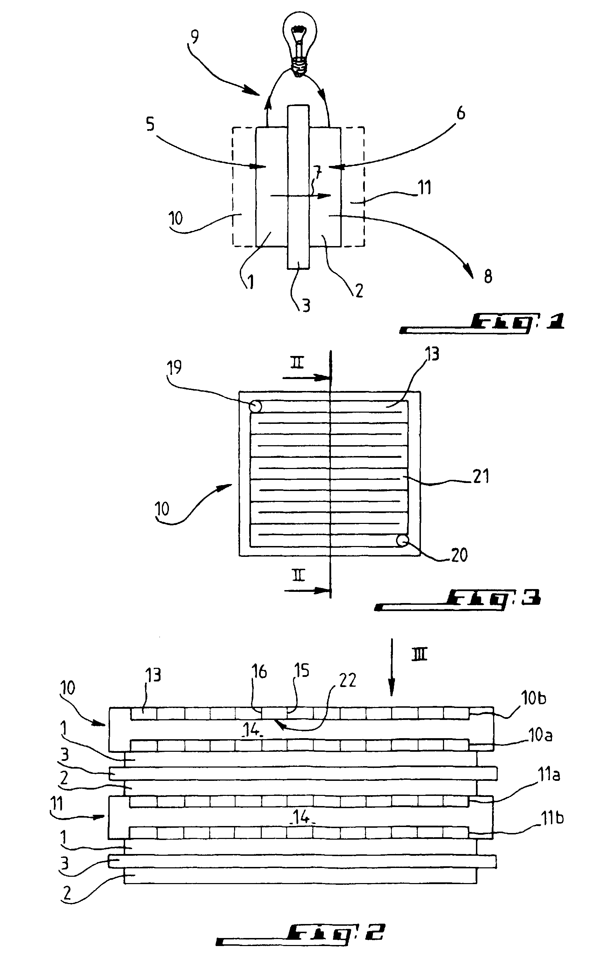

La fourniture des gaz réactifs aux électrodes est accomplie à l'aide de distributeurs réalisés sous forme de plaques, par exemple de plaques bipolaires, montrées en 10 et 11 sur la figure 2. Ces plaques sont disposées de part et d'autre de l'ensemble formé par les électrodes 1, 2 et l'électrolyte 3 et représenté sur la figure 1.

Comme le montre la figure 2, un côté de la plaque distributrice 10, à savoir le côté 10a, est en contact avec la face libre de l'électrode d'anode 1 tandis qu'un côté, à savoir le côté lla, est en contact avec la face libre de l'électrode de cathode 2. Dans une pile à plusieurs ensembles électrodes-électrolyte selon la figure 1, les autres côtés 10b et 11b des plaques bipolaires 10 et 11 sont en contact avec des électrodes respectivement d'électrode 2 et d'anode 1.

Les plaques distributrices 10 et 11 viennent au contact des électrodes pour distribuer les réactifs, évacuer les produits de réaction et collecter le courant.

Selon la présente invention, chaque plaque distributrice bipolaire 10, 11 est formée par empilement de fines lamelles de poreux 13 d'une part et d'autre d'un matériau 14, par exemple d'une feuille, imperméable au gaz et de haute conduction électronique. Ce matériau peut être de type métallique ou plastique conducteur.

Les lamelles de poreux 13 sont rendues étanches au gaz sur trois côtés, à savoir les côtés 15, 16 et 22 adjacents des lames voisines et aux côtés détournés de l'électrode. Comme l'illustre la figure 3, les lamelles de poreux 13 sont montées en série dans l'empilement pour un gaz réactif circulant entre l'entrée de gaz 19 et la sortie 20, prévues respectivement, par exemple en haut et en bas de la plaque, au niveau des angles diagonalement opposés. La circulation d'une lame à l'autre est assuré par un distributeur en plastique 21 disposé aux bords de l'empilement qui s'étendent perpendiculairement aux lames. Pour rendre les lames de poreux imperméables au gaz, aux côtés 15 et 16, il est avantageux d'interposer entre deux lames adjacentes des feuilles de matériaux imperméables aux gaz.

Grâce à l'utilisation de plaques, formées par l'empilement de fines lames de poreux, l'invention procure aussi un avantage au niveau de la gestion thermique et hydraulique de la pile à combustible. Comme le montre la figure 1, dans la pile de l'eau est produite à la cathode 2. L'utilisation d'un poreux selon l'invention peut permettre par un effet capillaire d'éviter que beaucoup de liquide ne s'accumule au niveau des électrodes, bloquant les sites catalytiques. Dans les piles "classiques" à canaux, les gaz réactifs sont pré-humidifiés dans des unités d'humidification, avant de pénétrer dans la cellule de pile à combustible. Ces unités d'humidification sont très pénalisantes en poids et en volume. L'utilisation de poreux, conformément à l'invention, permet une suppression ou une gestion simplifiée de l'eau dans ce type de pile et donc un gain sensible au niveau des performances par unité de poids ou de volume. En effet, l'électrolyte est humidifiée par le poreux dont la porosité à l'eau sera alors choisie pour absorber suffisamment d'eau pour cette humidification de l'électrolyte. A cette fin, l'eau produite dans la pile est en partie renvoyée vers le poreux grâce à un matériau hydrophobe.

Un autre avantage de l'invention réside dans le fait que les plaques peuvent avoir une épaisseur moindre par rapport aux plaques connues.

De plus, par l'emploi d'un débit de gaz adapté, l'eau qui présente une température entre 60 à 90° peut être évaporée soit dans les distributeurs poreux, soit à l'interface poreux - électrode, consommant ainsi des calories et facilitent le refroidissement de la pile.

Le principe de distribution des réactifs, conformément à l'invention, peut être adapté à tout type de pile à combustible haute, basse et moyenne température, à la fois pour des applications stationnaires de production délocalisée d'électricité et les applications mobiles telles que des véhicules particuliers, des bus, des bateaux, des sous-marins ou autres. Il est à noter qu'il pourrait être avantageux d'utiliser, par exemple dans un véhicule automobile, de l'air à la place de l'oxygène.

## Revendications

1. Pile à combustible du type comprenant au moins un ensemble formé par des électrodes d'anode et de cathode, un électrolyte situé entre les deux électrodes et des distributeurs en forme de plaques placées de part et d'autre de cet ensemble, au contact des électrodes, pour distribuer les réactifs, évacuer les produits de réaction et collecter le courant, les distributeurs étant formés par des plaques électriquement conductrices et adaptées pour permettre que les réactifs circulant entre une entrée et une sortie viennent en contact avec les électrodes, caractérisés en ce que chaque distributeur en forme de plaques (10, 11) est constitué d'au moins un empilement de lames de poreux (13) adaptées pour former un arrangement dans lequel les lames sont parcourues en série par le gaz réactif.

2. Pile à combustible selon la revendication 1, caractérisée en ce qu'un distributeur (10, 11) est réalisé sous forme d'une plaque bipolaire comprenant deux empilements de lames de poreux (13) situés de part et d'autre d'un matériau (14) imperméable au gaz et électroniquement conducteur.

3. Pile à combustible selon l'une des revendications 1 ou 2, caractérisée en ce que les lames de poreux (13) sont imperméables aux gaz réactifs aux côtés (15, 16) en contact avec d'autres lames et à la face qui n'est pas en contact avec l'électrode (1,2).

4. Pile à combustible selon la revendication 3, caractérisée en ce que les lames de poreux (13) adjacentes sont rendues imperméables au gaz à leurs côtés (15, 16) mutuellement en regard par des feuilles de matériaux imperméables au gaz, interposées entre les lames.

5. Pile à combustible selon l'une des revendications 1 à 4, caractérisée en ce que la circulation du gaz réactif d'une lame (13) à l'autre est assurée par un distributeur (21) disposé à chaque bord de l'empilement, qui s'étend perpendiculaire aux lames.

**6.** Pile à combustible selon l'une des revendications précédentes, caractérisée en ce que l'eau produite par la pile est renvoyée en partie vers le poreux pour humidifier l'électrolyte.

**7.** Pile à combustible selon la revendication 6, caractérisée en ce que l'eau est renvoyée par un matériau hydrophobe.

**8.** Pile à combustible selon l'une des revendications précédentes, caractérisée en ce que la porosité à l'eau du poreux constituant les lames (13) est choisi pour absorber suffisamment d'eau pour assurer l'humidification des gaz réactifs.

**9.** Pile à combustible selon l'une des revendications précédentes, caractérisée en ce que le débit du gaz réactif est adapté pour permettre l'évacuation de l'eau en excès par évaporation.

**10.** Pile à combustible selon l'une des revendications 2 à 9, caractérisée en ce que le matériau imperméable est une feuille en un matériau imperméable au gaz et électriquement conducteur.

**Patentansprüche**

**1.** Brennstoffzelle der Art, umfassend wenigstens einen durch Anoden- und Kathodenelektroden gebildeten Aufbau, ein sich zwischen den zwei Elektroden befindendendes Elektrolyt und plattenförmige Verteiler, die auf jeder Seite dieses Aufbaus in Kontakt mit den Elektroden angebracht sind, um die Reaktanten zu verteilen, die Reaktionsprodukte auszutragen und den Strom zu sammeln, wobei die Verteiler durch elektrisch leitende Platten gebildet werden, und angepaßt sind, um es zu ermöglichen, daß die zwischen einem Eingang und einem Ausgang zirkulierenden Reaktanten mit den Elektroden in Kontakt kommen, dadurch gekennzeichnet, daß jeder plattenförmige Verteiler (10, 11) wenigstens aus einem Stapel poröser Lamellen (13) besteht, die angepaßt sind, um eine Anordnung zu bilden, in der die Lamellen in Serie von dem Reaktantgas durchlaufen werden.

**2.** Brennstoffzelle gemäß Anspruch 1, dadurch gekennzeichnet, daß ein Verteiler (10, 11) in bipolarer Plattenform realisiert wird, der zwei Stapel poröser Lamellen (13) umfaßt, die sich auf jeder Seite eines für Gas undurchlässigen und elektronisch leitenden Materials (14) befinden.

**3.** Brennstoffzelle gemäß Anspruch 1 oder 2, dadurch gekennzeichnet, daß die porösen Lamellen (13) an den mit anderen Lamellen in Kontakt stehenden Seiten (15, 16) und auf der Oberfläche, die nicht mit der Elektrode (1, 2) in Kontakt ist, für die Reaktantgase undurchlässig sind.

**4.** Brennstoffzelle gemäß Anspruch 3, dadurch gekennzeichnet, daß die anliegenden porösen Lamellen (13) an ihren einander gegenüberliegenden Seiten (15, 16) durch aus einem für das Gas undurchlässigen Material bestehenden, zwischen den Lamellen zwischengeschobene Folien für das Gas undurchlässig gemacht werden.

**5.** Brennstoffzelle gemäß Anspruch 1 bis 4, dadurch gekennzeichnet, daß der Kreislauf des Reaktantgases von einer Lamelle (13) zur anderen durch einen an jedem Rand des Stapels angeordneten Verteiler (21) gewährleistet wird, der sich senkrecht zu den Lamellen erstreckt.

**6.** Brennstoffzelle gemäß einem der vorherigen Ansprüche, dadurch gekennzeichnet, daß das von der Zelle produzierte Wasser teilweise zu den porösen Lamellen zurückgeleitet wird, um das Elektrolyt zu befeuchten.

**7.** Brennstoffzelle gemäß Anspruch 6, dadurch gekennzeichnet, daß das Wasser von einem hydrophoben Material zurückgeleitet wird.

**8.** Brennstoffzelle gemäß einem der vorherigen Ansprüche, dadurch gekennzeichnet, daß die Wasserdurchlässigkeit der die Lamellen (13) bildenden porösen Stoffe ausgewählt wird, um ausreichend Wasser zu absorbieren, um die Befeuchtung der Reaktantgase zu gewährleisten.

**9.** Brennstoffzelle gemäß einem der vorherigen Ansprüche, dadurch gekennzeichnet, daß der Durchsatz des Reaktantgases angepaßt ist, um den Austrag des überschüssigen Wassers durch Verdampfung zu erlauben.

**10.** Brennstoffzelle gemäß Anspruch 2 bis 9, dadurch gekennzeichnet, daß das undurchlässige Material eine Folie aus einem für Gas undurchlässigen und elektrisch leitenden Material ist.

**Claims**

**1.** Fuel cell of the type comprising at least one assembly formed by anode and cathode electrodes, an electrolyte situated between the two electrodes and plate like distribution elements placed on both sides of this assembly, in contact with the electrodes, for distributing the reactants, removing the reaction products and collecting the current, the distribution elements being formed by plates that are electrically conducting and adapted for permitting the reactants that circulate between an inlet and an outlet to come into contact with the electrodes, characterized in that each plate like distribution element (10, 11) is constituted by at least one piling of blades of porous (13) adapted for forming an arrangement in which the blades are serially traversed by the reactant gas.

2. Fuel cell according to claim 1, characterized in that a distribution element (10, 11) is made in the shape of a bipolar plate comprising two piling of blades of porous (13) situated on both sides of a gas impervious and electronically conducting material (14).

3. Fuel cell according to one of claims 1 or 2, characterized in that the blades of porous (13) are impervious to the reactant gases at sides (15, 16) in contact with other blades and to the face which is not in contact with the electrode (1, 2).

4. Fuel cell according to claim 3, characterized in that the adjacent blades of porous (13) are made to be gas impervious at their sides (15, 16) that are mutually opposite by means of gas impervious material sheets that are interposed between the blades.

5. Fuel cell according to one of claims 1 to 4, characterized in that the flow of reactant gas from one blade (13) to the other is provided by a distribution element (21) that is arranged at each edge of the piling, which extends perpendicularly to the blades.

6. Fuel cell according to one of the preceding claims, characterized in that water that is produced by the cell is returned in part towards the product for humidifying the electrolyte.

7. Fuel cell according to claim 6, characterized in that the water is returned by means of a hydrophobic material.

8. Fuel cell according to one of the preceding claims, characterized in that the water porosity of the porous that constitutes the blade (13) is so chosen to absorb a sufficient amount of water for ensuring humidification of the reactant gases.

9. Fuel cell according to one of the preceding claims, characterized in that the output of the reactant gas is adapted for permitting removal of the excess water through vaporisation.

10. Fuel cell according to one of claims 2 to 9, characterized in that the impervious material is a sheet in a gas impervious and electrically conducting material.

Fig. 1

Fig. 3

Fig. 2